# EUROPEAN PATENT APPLICATION

(11) **EP 1 785 915 A1**
(43) Date of publication of application: **16.05.2007**
(21) Application number: 05767228.9
(22) Date of filing: 28.07.2005
(51) Int. Cl.: G06K 17/00, B42D 15/10

(54) **READER/WRITER FOR NON-CONTACT IC CHIP**

(30) Priority: 04.08.2004 JP 2004228245
(71) Applicant: Sanden Corporation, Isesaki-shi, Gunma 372-8502 (JP)
(72) Inventor: MATSUMOTO, Naoto, SANDEN CORPORATION,, Isesaki-shi Gunma 372-8502 (JP); SONE, Yuuji, SANDEN CORPORATION,, Isesaki-shi Gunma 372-8502 (JP); NAKAJIMA, Yasunari, SANDEN CORPORATION, Isesaki-shi Gunma 372-8502 (JP); KAMEDA, Tomonobu, SANDEN CORPORATION, Isesaki-shi Gunma 372-8502 (JP)
(74) Representative: Haley, Stephen
(86) International application number: PCT/JP2005/013816
(87) International publication number: WO 2006/013770

(57) **Abstract**

In a contactless IC chip reader/writer comprising communication units 100 for performing data communication with a contactless IC chip and a main control unit 200 for controlling communication with a contactless IC chip 10 via the communication unit 100 in response to a request from an external apparatus, plural communication units are provided for one main control unit; and the main control unit and each communication unit are provided with a communication controller for performing data communication between each communication unit and the main control unit.

## Description

### Technical field

The present invention relates to a contactless IC chip reader/writer for writing and reading data to and from a contactless IC chip capable of functioning as a commuter pass, an employee ID card, a member card, an electronic wallet and the like.

### Background art

Recently, a contactless IC chip embedded a program which functions as a commuter pass, an employee ID card, a member card, an electronic purse and the like has been in widespread use. This contactless IC chip is actually used being buried in a card or a mobile phone. This contactless IC chip is caused to operate by an electric wave provided from a contactless IC chip reader/writer (hereinafter simply referred to as "a reader/writer").

As a conventional reader/writer, the reader/writer described in Patent Document 1 is known. The reader/writer described in Patent Document 1 is a reader/writer included in a vending machine, and its operation is controlled by a main computer. After performing electronic money settlement processing with the contactless IC chip using the reader/writer, the main computer sends settlement data to a predetermined server which manages electronic money.
Patent Document 1: Japanese Patent Publication No. 2001-229347

### Disclosure of the invention

### Problems to be solved by the invention

When sending the settlement data to the predetermined server, the main computer is required to perform predetermined encryption processing decided with an electronic money management company for this settlement data. Since it is necessary to perform this encryption processing at a high speed, a high-performance arithmetic unit is required. Therefore, in the case of installing multiple readers/writers, there is a problem that a high-performance arithmetic unit is required for the conventional apparatus configuration, and the cost is increased.

The present invention has been made in consideration of the above situation, and its object is to provide a contactless IC chip reader/writer capable of responding to multiple contactless IC chips at a low cost.

### Means for solving the problems

In order to achieve the above object, this application proposes a contactless IC chip reader/writer comprising a communication unit for performing data communication with a contactless IC chip and a main control unit for controlling communication with a contactless IC chip via the communication unit in response to a request from an external apparatus, characterized in that: plural communication units are provided for one main control unit; and the main control unit and each communication unit are provided with a communication controller for performing data communication between each communication unit and the main control unit.

According to the present invention, there are provided multiple communication units for communicating with a contactless IC chip for one main control unit to enable communication between the main control unit and each of the communication units. Consequently, it is possible to respond to multiple contactless IC chips at a low cost without increasing the number of main control units required to have a high arithmetic capability.

The data communication route between the main control unit and each control unit may be wirelessly constructed. It may be wiredly constructed. It is preferable that the main control unit performs authentication processing for confirming whether or not each communication unit is authorized at least when a power supply is on, because it can prevent connection by unauthorized equipment.

### Advantages of the invention

As described above, according to the present invention, there are provided multiple communication units for communicating with a contactless IC chip for one main control unit to enable communication between the main control unit and each of the communication units. Consequently, it is possible to respond to multiple contactless IC chips at a low cost without increasing the number of main control units required to have a high arithmetic capability.

### Brief description of the drawings

Figure 1 is a block diagram of a contactless IC chip reader/writer according to a first embodiment;
Figure 2 is a diagram illustrating the form of connection between a main unit and communication units;
Figure 3 is a flowchart illustrating the operation of the main unit;
Figure 4 is a block diagram of a contactless IC chip reader/writer according to a second embodiment; and
Figure 5 is a block diagram of a wireless relay unit.

### Description of symbols

10 ... contactless IC card
20 ... network
21 ... electronic money management server
100 ... communication unit
110 ... communication controller
120 ... reader/writer controller
121 ... encryption processor
130 ... high-frequency (RF) circuit
140 ... antenna
150 ... wireless relay unit
200 ... main unit
210 ... communication controller
220 ... main controller
221 ... encryption processor
230 ... modem
240 ... wireless relay unit
300 ... communication cable

### Best mode for carrying out the invention

### (First embodiment)

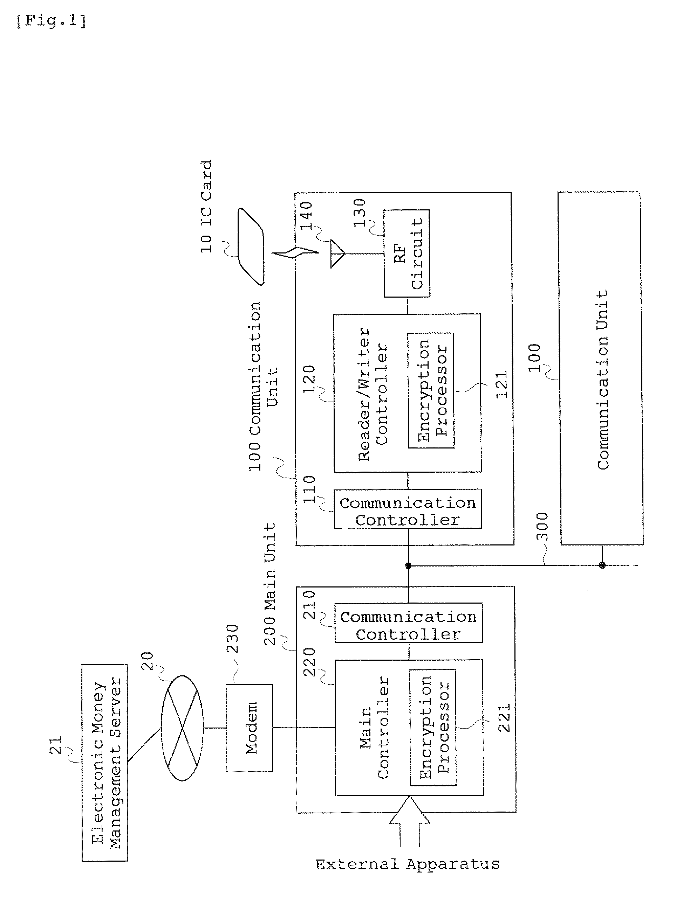

A contactless IC card reader/writer according to an embodiment of the present invention will be described with reference to drawings. Figure 1 is a block diagram of a contactless IC card reader/writer. The contactless IC card reader/writer (hereinafter referred to simply as "a reader/writer") according to this embodiment performs processings related to electronic money, such as settlement processing and balance confirmation, for an IC card in which a contactless IC chip functioning as an electronic wallet is buried.

As shown in Figure 1, the reader/writer according to this embodiment is provided with communication units 100 for performing data communication with an IC card 10, and a main unit 200 for performing processings related to electronic money with the use of the communication units 100. The main unit 200 performs processing related to electronic money in response to a request from an external apparatus such as a vending machine and a control unit of a POS terminal, for example. The present invention is characterized in that multiple communication units 100 are connected to one main unit 200 via a communication line 300 as shown in Figure 1.

Each of the communication units 100 is provided with a communication controller 110 for performing communication with the main unit 200, a reader/writer controller 120 for controlling data communication with an IC card 10, a high-frequency (RF) circuit 130 for communication with an IC card 10 and an antenna 140. The reader/writer controller 120 is provided with an encryption processor 121 for encrypting data communicated between the communication unit 100 and an IC card 10. Since electronic money information communicated wirelessly is encrypted by this, security is enhanced.

The main unit 200 is provided with a communication controller 210 for performing communication with the communication units 100 and a main controller 220 for performing various processings related to electronic money using the communication unit 100 in response to an instruction from an external apparatus. A modem 230 is connected to the main controller 220 to enable communication with an electronic money management server 21 via a network 20. Data to be sent to the electronic money management server 21 by the main controller 220 is mainly settlement information about settlement performed with electronic money. This settlement information is encrypted by an encryption processor 221 provided for the main controller 220.

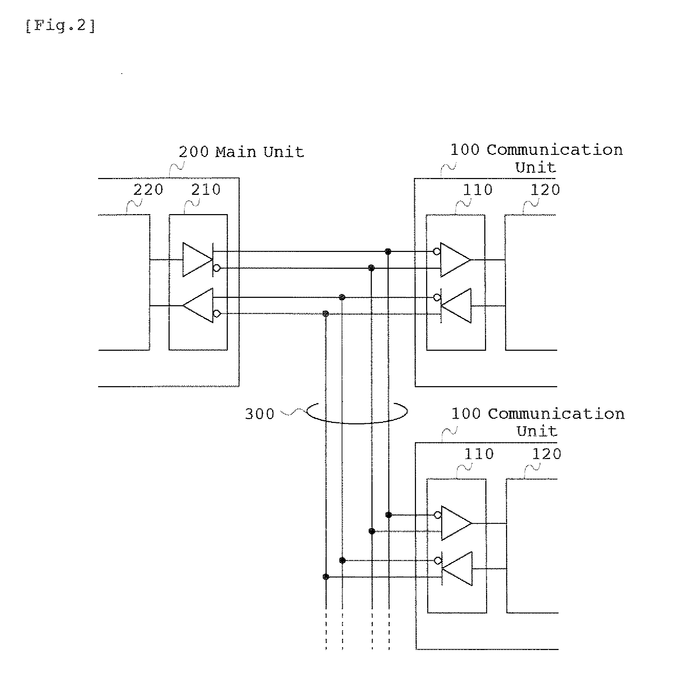

Next, the form of connection between each of the communication units 100 and the main unit 200 will be described with reference to Figure 2. Figure 2 is a diagram illustrating the form of connection between the communication units and the main unit.

As shown in Figure 2, the communication units 100 and the main unit 200 are connected via buses. Each of the communication controller 110 of the communication unit 100 and the communication controller 210 of the main unit 200 is configured by a transceiver for bus connection. As the bus access control system used in such a connection form, various systems can be used, such as a polling system and a CSMA/CD system, for example.

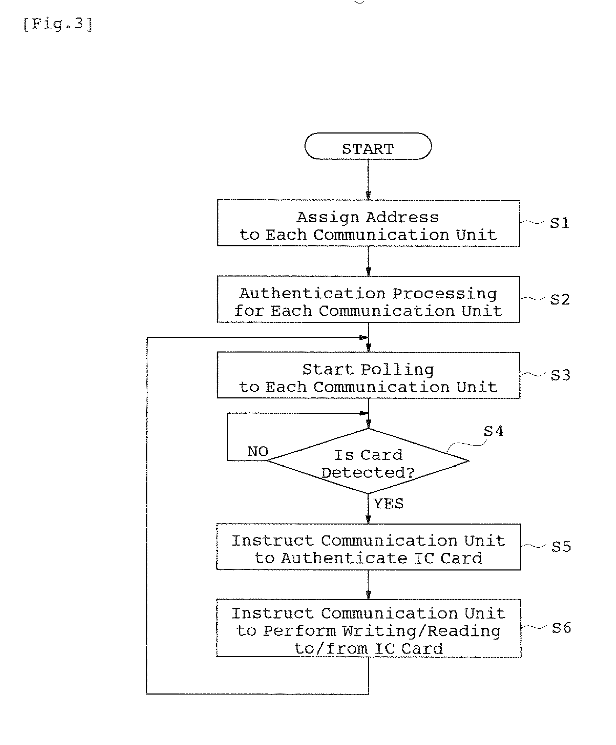

Next, the operation of this reader/writer will be described with reference to the flowchart in Figure 3. Figure 3 is a flowchart illustrating the operation of the main unit of the reader/writer.

When the power supply is on, the main unit 200 starts the operation and assigns an address (ID) to each of the connected multiple communication units 100 (step S1). Next, the main unit 200 performs authentication processing for confirming whether or not each of the communication units 100 is authorized (step S2). The above steps are the initial operation.

Subsequently, the main unit 200 starts a polling operation to detect whether or not an IC card 10 has been detected in each of the communication units 100 (step S3). When detecting that any of the communication units 100 has detected an IC card 10 (step S4), the main unit 200 instructs the communication unit 100 to perform authentication processing for the IC card 10 (step 55). When receiving that the authentication processing has been completed from the communication unit 100, the main unit 200 instructs the communication unit 100 to perform predetermined reading processing or writing processing specified by an external apparatus for the IC card 10 (step 56). When the reading/writing processing is completed, the main unit 200 again returns to the polling operation.

As described above, since multiple communication units 100 can be connected to one main unit 200 in the reader/writer according to this embodiment, it is possible to construct a system capable of responding to multiple IC cards 10 inexpensively.

While writing/reading of data to/from an IC card 10 is being performed with the use of a certain communication unit 100, the main unit 200 may permit or inhibit communication with the other communication units 100.

In the above embodiment, master-slave communication in which the main unit 200 performs a polling operation to the communication units 100 has been shown as an example. However, an event type may be also possible in which, when the communication unit 100 detects an event such as detection of an IC card 10, the communication unit 100 accesses the main unit 200.

### (Second embodiment)

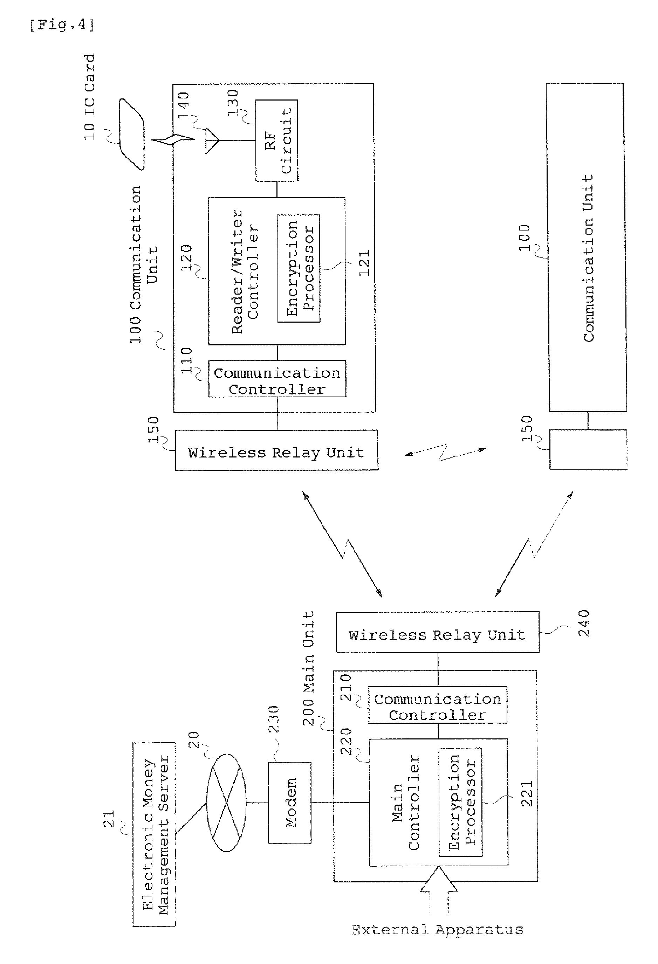

A reader/writer according to a second embodiment of the present invention will be described with reference to drawings. Figure 4 is a block diagram of a contactless IC card reader/writer.

The reader/writer according to this embodiment is different from that of the first embodiment in that the communication route between the main unit 200 and the communication unit 100 is wirelessly constructed. In order to realize the wireless communication route, wireless relay units 240 and 150 are connected to the main unit 200 and each of the communication units 100 in this embodiment, as shown in Figure 4. Other configurations and operations are similar to those in the first embodiment.

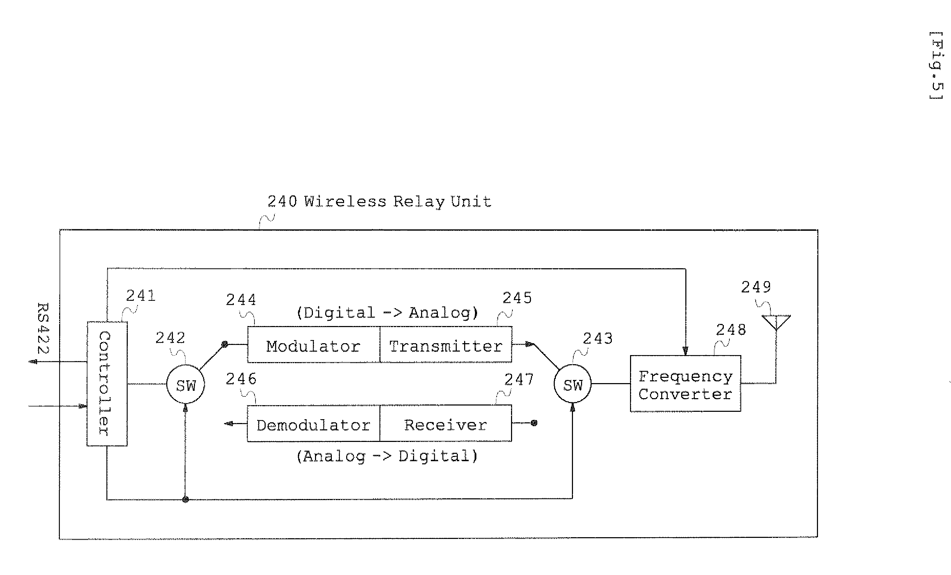

The configuration of the wireless relay unit will be described with reference to Figure 5. Figure 5 is a block diagram of the wireless relay unit. Since the wireless relay unit 240 connected to the main unit 200 and the wireless relay units 150 connected to the communication units 100 are the same, only the wireless relay unit 240 connected to the main unit 200 will be described here, and description of the wireless relay units 150 connected to the communication units 100 will be omitted.

The wireless relay unit 240 is provided with a controller 241 connected to the main unit 200, switches 242 and 243 for switching between a receiving-side circuit and a sending-side circuit, a modulator 244 and a transmitter 245 for converting a digital signal to an analog signal, a demodulator 246 and a receiver 247 for converting an analog signal to a digital signal, a frequency converter 248 for converting the frequency of an analog signal used by the transmitter 245 and the receiver 247 and the frequency of a wireless signal to be a carrier to each other, and an antenna 249. RS422 is used as a connection interface between the control unit 241 and the main unit 200. As for various protocols, such as for the wireless frequency band and the modulation/demodulation systems, those that are well known are applicable.

According to this embodiment, since the communicat ion route between the main unit 200 and each of the communication units 100 is wirelessly constructed, various layout of each equipment can be designed. Other operations and advantages are the same as those of the first embodiment.

The embodiments of the present invention have been described. However, the present invention is not limited thereto. For example, though an IC card 10 in which a contactless IC chip is buried has been described in the above embodiments, the contactless IC chip can be mounted on various equipment and objects, for example, a mobile phone, a watch, a PDA, a personal computer, a bracelet, a finger ring, an earring and the like.

In the above embodiments, a contactless IC chip functioning as an electronic wallet has been described. However, the present invention can be applied to a contactless IC chip having another function. For example, contactless IC chips functioning as a commuter pass, an employee ID card and a member card can be given. These multiple functions may be mounted.

Furthermore, in the above embodiments, the modem 230 is separately provided so that the main unit 200 communicates with the electronic money management server 21. However, if network communication equipment, for example, a POS terminal is already provided as an external apparatus, this network communication equipment can be shared by the POS terminal and the main unit 200.

Furthermore, the form of connection between the main unit 200 and the communication units 100 illustrated in the above embodiments is only an example, and various communication systems and protocols can be used.

## Claims

1. A contactless IC chip reader/writer comprising a communication unit for performing data communication with a contactless IC chip and a main control unit for controlling communication with a contactless IC chip via the communication unit in response to a request from an external apparatus, **characterized in that**:
plural communication units are provided for one main control unit; and
the main control unit and each communication unit are provided with a communication controller for performing data communication between each communication unit and the main control unit.

2. The contactless IC chip reader/writer according to claim 1, **characterized in that** the communication controller of the main control unit and each communication unit control wired data communication.

3. The contactless IC chip reader/writer according to claim 1, **characterized in that** the communication controller of the main control unit and each communication unit control wireless data communication.

4. The contactless IC chip reader/writer according to any one of claims 1 to 3, **characterized in that** the main control unit performs authentication processing for confirming whether or not each communication unit is authorized at least when a power supply is on.

5. The contactless IC chip reader/writer according to any one of claims 1 to 4, **characterized in that** the main control unit performs settlement processing with electronic money for a contactless IC chip which functions as an electronic wallet.
